# EUROPÄISCHE PATENTSCHRIFT

(11) **EP 1 325 047 B1**
(45) Veröffentlichungstag und Bekanntmachung des Hinweises auf die Patenterteilung: **21.12.2005**
(21) Anmeldenummer: 01958046.3
(22) Anmeldetag: 02.08.2001
(51) Int. Cl.: C08G 12/42

(54) **PFROPFPOLYMERE ODER -COPOLYMERE**
GRAFT POLYMERS OR GRAFT COPOLYMERS
POLYMERES OU COPOLYMERES GREFFES

(30) Priorität: 04.08.2000 DE 10038147
(43) Veröffentlichungstag der Anmeldung: 09.07.2003
(73) Patentinhaber: SÜD-CHEMIE AG, 80333 München (DE)
(72) Erfinder: STEINMETZ, Alan, Lawrence, Louisville, KY 40205 (US); SCHALL, Norbert, 85659 Forstern (DE); DZIWOK, Klaus, 83395 Freilassing (DE); COUTELLE, Helmut, 85356 Freising (DE); SIMON, Wolfgang, 85375 Neufahrn (DE); DICK, Stefan, Albuquerque, NM 87111 (US); KRÄMER, Inge, 85435 Erding (DE)
(74) Vertreter: Westendorp, Michael Oliver
(86) Internationale Anmeldenummer: PCT/EP2001/008940
(87) Internationale Veröffentlichungsnummer: WO 2002/012363

(56) Entgegenhaltungen:
- WO-A-01/12712
- US-A- 5 914 373

## Beschreibung

Die Erfindung betrifft Pfropfpolymere oder -copolymere, welche eine Aminoplast-Zentraleinheit enthalten.

Pfropfpolymere (Graft Polymers) bestehen im allgemeinen aus einer Hauptkette und "aufgepfropften" Nebenketten. Pfropfcopolymere enthalten in der Hauptkette zwei oder mehrere Basis- oder Grundpolymer-Einheiten, auf die davon strukturell verschiedene Seitenketten aufgepfropft sind. Art, Anzahl und Länge der aufgepfropften Seitenketten bestimmen im wesentlichen die Merkmale dieser Stoffgruppe. Die Seitenketten können an die funktionellen Gruppen der Hauptkette gekoppelt sein, wobei eine oder mehrere Verzweigungen entstehen können.

Die Pfropfpolymere oder -copolymere können nach einem Verfahren hergestellt werden, bei dem auf einer bereits makromolekular vorliegenden Verbindung die Polymerisation unter Einsatz eines anders gearteten Polymers fortgesetzt wird, wobei dessen Moleküle auf die Kette des Makromoleküls als Seitenkette aufgepfropft werden. Man kann beispielsweise in die Hauptkette eine funktionelle Gruppe einführen, so dass auf etwa 25 bis 100 Monomere eine solche Gruppe entfällt. Die funktionelle Gruppe kann gegebenenfalls weiter umgewandelt werden, so dass an ihr eine Polymerisation von Monomeren, die die endgültige Seitenkette bilden, erfolgen kann.

Pfropfpolymere und -copolymere werden auf den verschiedensten Anwendungsgebieten eingesetzt, z.B. in Bindemittelsystemen für Farben und Lacke als Netzmittel und Haftvermittler. Ein wesentliches Merkmal ist die "lineare" Hauptkette, die mit funktionellen Gruppen ausgerüstet ist, an die die Seitenketten angehängt werden können.

Ein Überblick über diese Substanzklasse ist zu finden in IUPAC - Inf. Bull Nr. 30 (1967, S. 27).

Aus den EP-A-830 409, EP-A-835 251, EP-A-859 755 sowie in den US-A-5,627,232, 5,629,373 und 5,627,232 sind Beispiele für überwiegend lineare Pfropfcopolymere bekannt.

In diesen Patentschriften ist die Umsetzung einer Aminoplast-Zentraleinheit mit einem Alkylenoxid-Polymer (z.B. einem Polyethylenglykol) beschrieben, wobei ein Copolymer erhalten wird. Ein solches Copolymer enthält, an die Aminoplast-Zentraleinheit gebunden, eine nicht-funktionelle Seitenkette der Formel (RO)p, wobei R Wasserstoff, eine Alkylgruppe mit 1 bis 4 Kohlenstoffatomen oder eine Acylgruppe mit 1 bis 4 Kohlenstoffatomen und p eine positive Zahl darstellt, die gleich der freien Valenz der Aminoplast-Zentraleinheit minus 2 ist. Die erhaltenen Pfropfpolymere sind im allgemeinen wasserlöslich. Es besteht jedoch die Gefahr, dass bei einer Einführung von funktionellen Gruppen eine dreidimensionale Vernetzung auftritt, wodurch das entstehende Polymer wasserunlöslich wird.

Die US-A-5,627,232, 5,629,373 und 5,914,373 beschreiben lineare Aminoplast-Ether-Copolymere der Formel 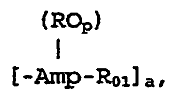 worin der zweiwertige Rest R₀₁ eine zweiwertige Alkylenoxy-haltige Gruppe, Amp den Skelettrest eines Aminoplastharzes, R Wasserstoff, eine Alkylgruppe mit 1 bis 4 Kohlenstoffatomen und eine Acylgruppe mit 1 bis 4 Kohlenstoffatomen, p eine positive Zahl, die der freien Valenz von Amp -2 entspricht, RO an Alkyleneinheiten von Amp gebunden ist und a eine Zahl größer als 1 darstellt.

Die linearen Aminoplast-Ether-Copolymere können in wasserhaltigen Zusammensetzungen oder in Überzugsmassen verwendet werden. Die linearen Aminoplast-Ether-Copolymere sind wasserlöslich und können gegebenenfalls auch hydrophobe Seitengruppen enthalten. Beschrieben wird der Spezialfall eines Pfropfcopolymers für den Einsatz in wässrigen Systemen und hierfür speziell für die Anwendung als Verdickungsmittel.

Die EP-A-565 924 beschreibt pulverförmige Überzugsmassen mit einem Aminoharz auf der Basis von Glycoluril. Die Amihoharz-Verbindung wird in einem Pulverlack als Härter verwendet. Eine Pfropfung ist nicht beschrieben. Die Zentraleinheit wird als "cross-linker" bezeichnet, was bedeutet, dass dieses Material im Prinzip dafür bekannt ist, andere Monomere kreuz und quer zu vernetzten und somit dreidimensionale Netzwerke aufzubauen. Die Herstellung von definierten Pfropfpolymerstrukturen, die erst isoliert und dann als eigenständige Additive eingesetzt werden können, ist nicht beschrieben.

Die EP-A-320 689 beschreibt nicht-wässrige Dispersionen von Mikropartikeln eines Homopolymers aus Aminoplasst und Polyol. Bezweckt wird die Herstellung einer Dispersion mit Teilchen einer möglichst gleichmäßigen Molekulargewichtsverteilung. Die Aminoplast-Polyol-Kondensationsprodukte werden als schwer herstellbar - in der gewünschten Form - beschrieben. Die genaue Struktur des resultierenden Polymers ist nicht beschrieben, auch sind keine vom Hauptpolymer verschiedene Pfropfungen beschrieben.

Einen ähnlichen Gegenstand betrifft die EP-B-318 939, welche die Basis zur EP-A-220 689 in einer weniger detaillierten Offenbarung darstellt. Wiederum ist keine Pfropfung erwähnt.

Die US-A-4,271,277 beschriebt die Verwendung von Glycoluril als Härter für Pulverlacke. Der resultierende gehärtete Pulverlack ist ein strukturell nicht beschriebenes Homopolymer ohne Pfropfung. Ziel der Erfindung ist die Verbesserung der Pulverlacke, die durch Vernetzung mit Aminoplasten entstehen, durch Zugabe von speziellen Katalysatoren.

Die US-A-4,229,400 beschreibt Aminoplast/Polyethylenoxid-Homopolymere, bei denen es sich nicht um Pfropfpolymere handelt. Ziel ist die Herstellung von verbesserten Druckplatten.

Der Erfindung liegt die Aufgabe zugrunde, Pfropfpolymere oder -copolymere bereitzustellen, die im wesentlichen linear sind und nur unter bestimmten Umständen vernetzt werden können und die durch Einbau von variablen Seitenketten einfach und gezielt modifiziert werden können, so dass sie in unpolaren Systemen verwendet werden können.

Diese Aufgabe wird erfindungsgemäß durch Pfropfpolymere oder -copolymere vom Strukturtyp 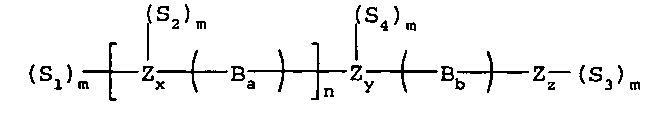 worin bedeuten:
- (Bₐ) und (B_{b}):: gleiche oder voneinander verschiedene hydrophobe bzw. überwiegend unpolare Basis- oder Grundpolymerketten, gegebenenfalls mit freien Valenzen zur Ausbildung einer vernetzten Struktur;
- Zₓ bis Z_{z}:: gleiche oder voneinander verschiedene Aminoplast-Zentraleinheiten auf der Basis eines Melamin-Formaldehyd- oder Harnstoff- Formaldehyd-Harzes, gegebenenfalls mit freien Valenzen zur Ausbildung einer vernetzten Struktur;
- (S₁) bis (S₄):: gleiche oder voneinander verschiedene hydrophobe oder hydrophile polare oder unpolare Seitenketten;
- m =: 1 - 10;
- n:: eine ganze Zahl von 0 bis 5000;
und die Struktur durch beliebige Endgruppen abgesättigt ist.

Die Anwendung dieser Stoffgruppe ist sehr vielseitig, wobei die Möglichkeit zur Modifizierung der Pfropfpolymere oder -copolymere nicht auf den Einsatz in Hochpolymeren beschränkt ist, sondern die entstehenden Produkte auch durchaus noch in Wasser oder in Lösungsmitteln lösliche Polymere sein können.

Die Hauptkette des Pfropfpolymers oder -copolymers ist im wesentlichen ein lineares Molekül. Dieses wird dadurch erzeugt, dass mindestens ein bifunktionelles Molekül polymerisiert oder polykondensiert wird, z. B. ein Diisocyanat, ein Diester, eine Dicarbonsäure, ein Dicarbonsäureanhydrid, ein Diol, ein Lacton, ein Lactam, oder eine andere bifunktionelle Verbindung aus der Gruppe der Silane oder Siloxane.
Im einfachsten Fall sind die "Seitenketten" die unterschiedlichen endständigen Gruppen (terminierende Endgruppen). Bei Pfropfpolymeren oder -copolymeren mit einem sehr hohen Molekulargewicht reicht aber die Modifizierung über die Endgruppen nicht aus, um die molekularen Eigenschaften dieser Produkte wesentlich zu ändern. Dies ist nur bei relativ geringen Molekulargewichten zu erwarten, z.B. von 10.000 bis 100.000 Dalton. Bei höhermolekularen Pfropfpolymeren oder -copolymeren ist die Einfügung von funktionellen Gruppen notwendig.

Die Herstellung der Pfropfpolymeren oder -copolymeren kann auf herkömmliche Art und Weise erfolgen, z.B. in Lösemitteln, in Wasser oder durch eine direkte Umsetzung der "Bausteine" mit oder ohne Hilfe eines Katalysators.

Alle diese Umsetzungen sind relativ aufwendig und weisen folgende Nachteile auf:

Die Einführung von Seitenketten mit funktionellen Gruppen ist im allgemeinen nicht einfach, da bei Zugabe der Seitenkettenmoleküle am Anfang entweder eine Quervernetzung stattfindet und damit kein Pfropfpolymer entsteht oder bei Zugabe nach der Ausbildung des linearen Grundgerüstes die notwendige Reaktionsfähigkeit mit der Seitenkette fehlt. Meist wird daher auf ein aufwendiges zwei- oder mehrstufiges Verfahren ausgewichen, bei dem erst z.B. durch "Anoxidation" einer PE-Basispolymerkette die notwendigen Reaktionszentren geschaffen werden müssen, an die dann eine Seitenkette angehängt werden kann.

Weiterhin hat die Herstellung der Pfropfpolymere nach herkömmlichen Verfahren den Nachteil, dass die Seitenketten bei radikalischer oder strahlungsinduzierter Polymerisation nur eine statistische Verteilung aufweisen.

Überraschenderweise wurde nun gefunden, dass man einen Teil dieser Nachteile umgehen kann, wenn die überwiegend linearen Pfropfpolymere oder -copolymere Aminoplast-Zentraleinheiten enthalten. Dies ist umso überraschender, als diese Substanzen normalerweise unter Säurekatalyse mit anderen funktionellen Gruppen mit aktivem Wasserstoff, wie Alkoholen, Thiolen, Carbonsäurn, Säureamiden, Carbamaten usw. reagieren und Oligomere und/oder Polymere dreidimensional vernetzen. Aus diesem Grund werden diese Materialien in einer Vielzahl von Anwendungen als "Vernetzungskomponenten" oder "Härter" z.B. in Beschichtungsmassen, eingesetzt. Überraschenderweise wurde aber gefunden, dass sich diese Aminoplast-Zentraleinheiten trotzdem zur Herstellung überwiegend linearer Propfpolymerer oder -copolymerer einsetzen lassen (Die Angabe "überwiegend linear" bezieht sich dabei definitionsgemäß auf das Grundpolymer).

Erfindungsgemäß ist es möglich, die Basis- oder Grundpolymerketten über die Aminoplast-Zentraleinheiten überwiegend linear miteinander zu verknüpfen und die Eigenschaften des Polymers durch die Aufpfropfung entsprechender andersartiger Seitenketten zu modifizieren. Ebenso wie bei den bekannten wasserlöslichen Pfropfcopolymeren kann durch eine entsprechende Auswahl der Seitenketten die resultierende HLB (hydrophile - lipophile Bilanz) gezielt eingestellt werden.

Ist das Einsatzgebiet erfindungsgemäß ein unpolares Medium, wie zum Beispiel ein Polyethylen oder Polypropylen, so wird ein überwiegend unpolares Basispolymer verwendet, z.B. ein langkettiges und endständiges Diol, ein Polyethylenglykol, Polypropylenglykol, Polytetrahydrofuran oder Kombinationen bzw. Blockpolymeren hiervon, oder ein Polyethylenwachs mit endständigen OH-Gruppen.

Vorzugsweise ist die Aminoplast-Zentraleinheit aus Monomeren der Formeln 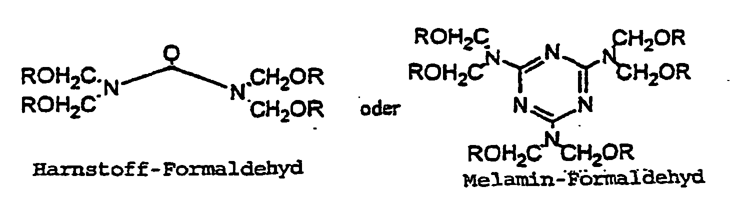 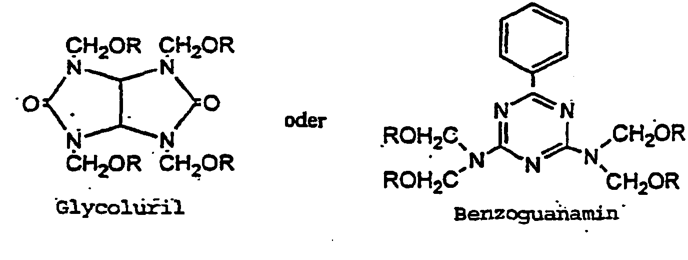 aufgebaut, worin R eine niedere Alkylgruppe, vorzugsweise eine Methyl- oder Ethylgruppe, darstellt.

Die Basis- oder Grundpolymerkette (Bₐ) bis (B_{c}) stellt vorzugsweise eine Polyalkylen-, z.B. eine Polyethylen- oder Polypropylen-; eine überwiegend unpolare Polyoxyalkylen-, z.B. eine Polyoxypropylen-, Polyoxybutylen-, eine Polytetrahydrofuran-; eine Polyurethan-, eine Polyoxyacrylat- oder -methacrylat, eine Polycarbonat- und/ oder eine Polysiloxan-Gruppierung dar.

Nach einer bevorzugten Ausführungsform hat mindestens eine Seitenkette (S₁) bis (S₃) eine Tensidstruktur mit einem polaren und einem unpolaren Ende und ist über eine OH-Gruppe mit der Zentraleinheit Zₓ bis Z_{z} reaktionsfähig, oder die Seitenketten enthalten zusätzlich eine funktionelle Gruppe.

In den erfindungsgemäßen Pfropfpolymeren oder -copolymeren können die Seitengruppen (S₁) bis (S₃) aus hydrophoben und/oder hydrophilen Seitengruppen ausgewählt aus einseitig alkylterminierten Polyethylen/Polypropylen-Copolymeren, gesättigten oder ungesättigten C₉ - C₃₆ -Alkylethoxylaten, CH₃-O-[CH₂-CH₂-O-]ₚH, Alk-O-[CH(CH₃)CH₂O-]ₚH; CH₃-(CH₂)nCH=CH- (CH₂)ₘ-CH₂OH (n, m, p = 1 bis 500) 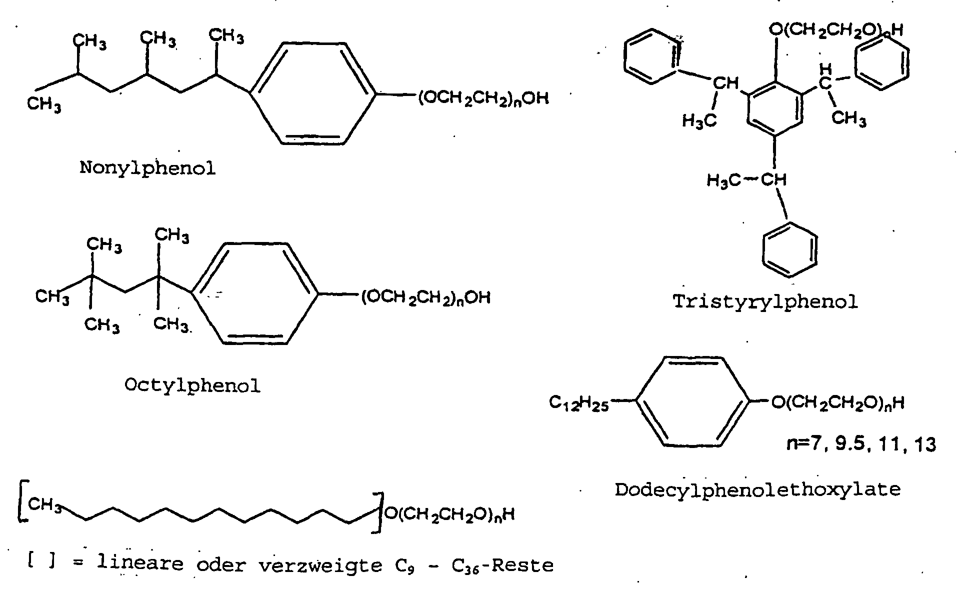 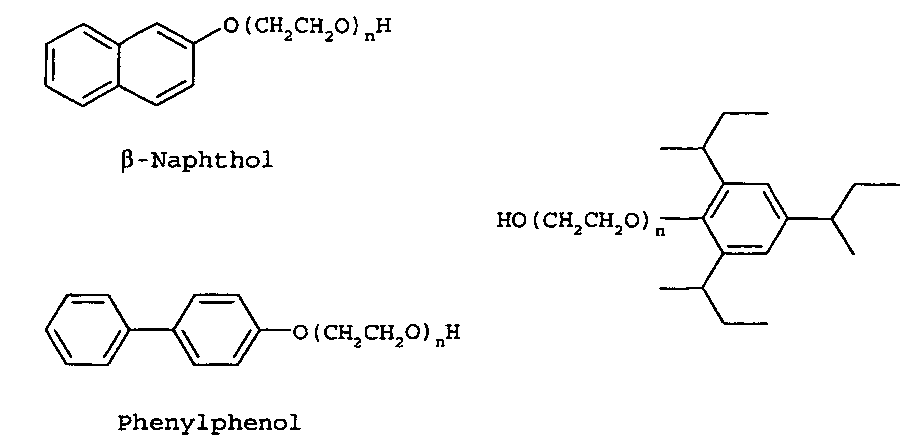 abgeleitet sein.

Vorzugsweise stellt in den Pfropfpolymeren oder -copolymeren n eine ganze Zahl von 1 bis 500, insbesondere von 1 bis 100, z. B. von 1 bis 10, dar.

In den erfindungsgemäßen Pfropfpolymeren oder -copolymeren können die Basis- oder Grundpolymerketten(Bₐ) bis (B_{b}) im wesentlichen hydrophob (unpolar) und die Seitenketten(S₁) bis (S₄) im wesentlichen hydrophil (polar) sein. Weiterhin können die erfindungsgemäßen Pfropfpolymere oder copolymere in fester oder flüssiger Form vorliegen und ihr Molekulargewicht liegt zwischen etwa 1.000 und 10.000.000, vorzugsweise zwischen etwa 1.000 und 1.000.000.

Gegenstand der Erfindung ist ferner ein Verfahren zur Herstellung der vorstehend beschriebenen Pfropfpolymere und -copolymere, das dadurch gekennzeichnet ist, dass man die Monomere oder Präpolymere in üblicher Weise, entweder in Lösung in Wasser oder in einem organischen Lösemittel, in Emulsion oder Suspension oder durch direkte Umsetzung der Komponenten in der Masse oder in Pulverform in der Schmelze, durch Polymerisation, Polyaddition, Polycondensation mit oder ohne Katalysator, vorzugsweise in einem Einstufenverfahren, miteinander umsetzt.

Durch die Möglichkeit, den HLB-Wert oder die Oberflächenspannung des entstehenden Pfropfpolymers oder -copolymers durch entsprechende Auswahl des Basispolymers und der Seitenkette gezielt einzustellen und zu variieren, ergeben sich viele verschiedene Anwendungen.

Gegenstand der Erfindung ist somit auch allgemein die Verwendung der vorstehend angegebenen Pfropfpolymeren oder -copolymeren, gelöst in einem organischen Lösungsmittel, oder aber in reiner flüssiger, oder in Pulverform.

Durch die abstufbare Einstellung der HLB-Bilanz ist ein Einsatz dieser Materialien z.B. bei der Emulsionspolymerisation möglich, um die Tröpfchengröße zu kontrollieren und zu stabilisieren und damit das Molekulargewicht zu beeinflussen. Gegenstand der Erfindung ist also auch die Verwendung der erfindungsgemäßen Pfropfpolymere oder -copolymere als Emulgatoren bei der Emulsionspolymerisation.

Weiterhin können durch Verwendung von Seitenketten mit funktionellen Gruppen gezielt die gewünschten Eigenschaften verbessert oder verändert werden. So kann an das Basispolymer anstelle von rein hydrophoben (oder hydrophilen) Seitenketten auch eine hydrophobe (oder hydrophile) Seitenkette mit einer zusätzlichen funktionellen Gruppe, wie z.B. einer Amino- oder Amido-., einer Nitril-, einer Carbonxyl-Gruppe oder eine Alkylenverbindung usw. aufgepfropft werden. Aminogruppen sind u.a. dafür bekannt, dass sie gut auf Pigment- oder Füllstoffoberflächen aufziehen können und so eine zusätzliche Dispergier- und/oder Netzwirkung aufweisen. Gegenstand der Erfindung ist somit auch die Verwendung der erfindungsgemäßen Pfropfpolymere oder -copolymere als Haftvermittler zwischen anorganischen oder organischen Pigment- und/oder Füllstoffoberflächen und organischen Polymermatrices.

Dafür stehen zwei prinzipielle Möglichkeiten zur Verfügung: Entweder wird die anorganische Oberfläche über Kupplungsreagentien so vorbehandelt, dass entsprechende reaktive Gruppen für eine Verbindung zum Pfropfcopolymer bereitstehen, oder es wird z.B. die Basiskette des Pfropfcopolymers so ausgewählt, dass diese z.B. mit der Oberfläche des Minerals wechselwirken kann und diese Oberfläche entsprechend "belegt". Die Belegung der anorganischen Oberfläche ist auch über geeignete Seitenketten möglich. Der jeweils nicht zur Belegung der anorganischen Oberfläche verwendete Teil des Pfropfcopolymers ist dann so auszuwählen, dass dieser Teil in Polarität und Molekülbau eine ausreichende Affinität zur umgebenden Matrix aufweist.

Dieses sich dem HLB-Wert des Systems anpassende Verhalten ist vor allem in flüssigen Formulierungen, wie Beschichtungsmassen, Farben, Lacken, Kosmetika bzw. im allgemeinen in allen flüssigen Systemen von Nutzen.

Beispiele für an die Basiskette angehängte hydrophobe Gruppen sind in Anspruch 5 angegeben.

Gegenstand der Erfindung ist daher auch die Verwendung der erfindungsgemäßen Pfropfpolymere oder -copolymere als Bindemittel für Farben, Lacke, Klebstoffe, Lasuren und/oder Papierbeschichtungen.

Doppelbindungen können in den Polymersystem in die Reaktion einbezogen werden, wie dies zum Beispiel bei UV-härtenden Systemen der Fall ist. In UV-härtenden Lacken kann das Pfropfcopolymer zunächst als rheologisches Additiv eingesetzt werden, das aber bei UV-Bestrahlung mit in das Polymergefüge eingebunden werden kann und einen Bestandteil des Films bildet. Damit lassen sich eine ganze Reihe von Nachteilen vermeiden, die durch "Fremdbestandteile" in einem ansonsten homogenen Beschichtungsfilm auftreten können, wie z.B. Entmi- , schungen, Aufschwimmen des Pfropfcopolymers an die Oberfläche usw.

Die erfindungsgemäßen Pfropfpolymere oder -copolymere können auch z.B. in thermisch geformten Kunststoffen und/oder Beschichtungen (z.B. Einbrennlacken/Pulverlacken oder dergl.) oder in säurehärtenden Systemen eingesetzt werden, wobei verbleibende "reaktive" Gruppen der Zentraleinheit zu einer weiteren Quervernetzung verwendet werden. Dabei entsteht aus Polymeren (Kunststoff/Bindemittelmolekülen) einerseits und Pfropfcopolymer andererseits durch Einbindung in das neu entstehende Polymergerüst ein einheitliches Polymer, das keine Entmischungsvorgänge mehr zeigt. Auch die "Implantation" von entsprechenden hydrophilen Gruppen in einen ansonsten hydrophoben Kunststoff ist möglich, der diese Materialien damit "biologisch" abbaubar machen kann. Gegenstand der Erfindung ist daher auch die Verwendung der erfindungsgemäßen Pfropfpolymeren und -copolymeren als Makromonomere mit biologisch abbaubaren Gruppen in einer Polymermatrix.

Die Ankopplung von Molekülen mit reaktiven und/oder funktionellen Gruppen ist ebenfalls möglich. Damit sind dann Folgereaktionen durchführbar, die es z.B. erlauben, dass das Kopfpolymer als Träger für andere Bestandteile verwendet werden kann. Ein Beispiel dafür kann die Stabilisierung von HALS-Verbindungen (Hindered Amine Light Stabilizers)in einer organischen Matrix sein, in dem über eine reaktive Gruppe des Pfropfcopolymers und eine korrespondierende Gruppe des sterisch gehinderten Amins dieses angekoppelt und damit über das Pfropfcopolymer in der organischen Matrix verankert werden kann. Das erfindungsgemäße Pfropfcopolymer ist daher auch als potentieller Träger anzusehen, der über reaktive Gruppen mit anderen organischen Materialien verknüpft werden kann, falls entsprechende reaktive Gruppen in diesem Material vorhanden sind. Dadurch, dass die Polarität, der HLB-Wert, das Molekulargewicht des Pfropfcopolymers den Matrixeigenschaften angepasst werden kann, ist eine Verankerung von in dieser Matrix prinzipiell unverträglicher Materialien über die Verbindung der Ankoppelung zu dem Pfropfcopolymer möglich. Damit können z.B. UV-Licht absorbierende Moleküle über das Pfropfcopolymer in eine Polymermatrix eingebaut werden, wodurch diese entweder stabilisiert oder aber über geeignete Gruppen "biologisch abbaubar" ausgerüstet werden können. Die "Permanent"-Ausrüstung von Kunstfasern mit Antistatika ist auf diese Weise ebenfalls möglich. Bis heute werden hierfür entweder Tenside verwendet, die in die Fasern eine gewisse Leitfähigkeit einbringen können, die aber auch den Nachteil haben, dass sie in der organischen Matrix wandern und ausgewaschen werden können. Für diese Zwecke wird häufig auch eine kationische Verbindung (z.B, aus der Gruppe der Alkylammonium- oder Phosphonium- bzw. Sulfoniumsalze) eingesetzt, die aber ebenfalls nicht permanent auf (in) der Faser verbleibt und dann zudem noch andere negative Effekte aufweisen kann. Als Ausweg wurden daher auch schon leitfähige Materialien, wie Graphit, eingesetzt, was aber aufgrund der Eigenfarbe nicht immer eine Lösung sein kann. Als Lösung werden inzwischen auch Blockcopolymere angeboten, die den Vorteil haben, als hochmolekulare Stoffe nicht an die Faseroberfläche auswandern zu können und somit in der organischen Matrix verbleiben. (Eine Übersicht über die zugrunde liegenden Mechanismen ist z.B. in der Veröffentlichung von Markus M. Grob et al. in Plastic Additives & Compounding, Juli 1999, Seiten 20 ff., zu finden). Die Verwendung der erfindungsgemäßen Pfropfcopolymere hat nun aber den zusätzlichen Vorteil, dass die Verankerung in der unpolaren Matrix "nur" über die Seitenketten gesteuert werden kann, so dass die leitfähige hydrophile Kette des organischen Materials nicht durch zur Verankerung notwendige hydrophobe Bereiche, wie in den bekannten Blockpolymeren, unterbrochen werden muss. Gegenstand der Erfindung ist daher auch die Verwendung der erfindungsgemäßen Pfropfpolymeren und -copolymeren als Antistatika in einer Polymermatrix.

Die Erfindung ist durch die nachstehenden Beispiele in nicht einschränkender Weise erläutert.

### Beispiel 1

In einem 500ml-Glaskolben werden 250g Pluriol® P 4000 (BASF, Polypropylenglykol mit Molekulargewicht von etwa 4000), 26,5 g Glykoluril Powderlink® 1174 (Fa. Cytec) und 36,5 g Pluriol® A350E (BASF, einseitig Methyl-terminiertes Polyethylenglykol mit Molekulargewicht von etwa 350) eingewogen. Die Rohstoffe werden bei 105°C im 40 mbar-Vakuum etwa 3h getrocknet, bis kein Gasen mehr auftritt. Das Vakuum wird mit Stickstoff gebrochen, worauf 2,2g Katalysator Nacure® 5076 (Worlee, 70% Dodecylbenzolsulfonsäure in Isopropanol) zugesetzt werden. Nach dem erneuten Anlegen des Vakuums wird unter Rühren innerhalb einer Stunde auf 130°C aufgeheizt. Nach etwa 3h Reaktionszeit wird die Masse so hochviskos, dass das entstehende Methanol nur noch als Schaum entweicht. Das Vakuum wird mit Stickstoff gebrochen, worauf 1,1g Triethanolamin und 0,2g 2,6-Di-tert.-butyl-4-methylphenol (Antioxidantien) 10 min. eingerührt werden. Das Reaktionsprodukt wird unter Stickstoff auf Raumtemperatur abgekühlt. Das Produkt ist eine honigartig zähe Masse, die nicht oder nur schlecht löslich in Wasser und Aliphatenbenzin (Shellsol® D60), trüb löslich in aromatenhaltigen Testbenzin K30, gut niedrigviskos löslich in Xylol, Butylacetat, Isopropanol und Butyldiglykol ist.

### Beispiel 2

In einem Sigma-Mischer werden 2000g Polybutylenglykol (MG etwa 2900; Poly-THF 2900, BASF), 293g Powderlink® 1174 (Fa. Cytec) and 233g Pluriol® A350E(BASF) eingewogen. Die Rohstoffe werden bei 105°C in 40-mbar Vakuum unter Rühren (30Upm) etwa 3 h getrocknet, bis kein Gasen mehr auftritt. Das Vakuum wird mit Stickstoff gebrochen, worauf 15,8 g Katalysator Nacure® 5976 (Worlee, 70% Dodecylbenzolsulfonsäure in Isopropanol) zugesetzt werden. Nach dem erneuten Anlegen des Vakuums wird das Reaktionsmittel mit 30Upm geknetet. Nach etwa 50 min Reaktionszeit wird die Masse hochviskos. Das Vakuum wird mit Stickstoff gebrochen, worauf 10 g Triethanolamin und 1g 2,6-Di-tert.-butyl-4-methylphenol (Antioxidantien) 10 min eingeknetet werden. Das Produkt ist eine wachsartige Masse, die in Wasser nicht löslich, aber in Xylol langsam, aber gut löslich ist.

### Anwendungsbeispiel

### Emulgierende Wirkung der Produkte nach Beispiel 1 und 2:

a) 30 g Xylol werden in einem Becherglas mit je 3 g der Emulgatoren nach Beispiel 1 bzw. 2 versetzt und leicht gerührt. Anschließend werden 70 g Leitungswasser zugesetzt, die mit 1 Tropfen Farbstofflösung Duasyn-Säurerhodamin® B 01, (Fa. Hoechst) in Wasser angefärbt werden. Das Gemisch wird im Ultra-Turrax-Rührer 2 min bei 24.000 Upm dispergiert. Die Emulsion wird in einen 100 ml-Standzylinder gefüllt und die Entmischung beobachtet.

| Ergebnis: | | |
|---|---|---|
| Emulgator | nach 1 h | nach 24 h |
| Nullprobe | total entmischt | total entmischt |
| Beispiel 1 | stabil | stabil, 2 ml Wasser, 1 ml Xylol separiert |
| Beispiel 2 | stabil | stabil, 3 ml Wasser, kein Xylol separiert |
| Igepal® RC 520* | stabil | stabil, 2 ml Wasser, 2 ml Xylol separiert |
| * = Dodecylphenolethoxylat, Fa. Rhodia, als Vergleich | | |

b) Versuch entsprechend a), aber mit 30 ml Wasser und 70 ml Xylol

| Ergebnis: | | |
|---|---|---|
| Emulgator | nach 1 h | nach 24 h |
| Nullprobe | total entmischt | total entmischt |
| Beispiel 1 | stabil | stabil, 1 ml Xylol separiert |
| Beispiel 2 | stabil | stabil, 2 ml Xylol separiert |
| Igepal® RC 520* | weitgehend entmischt | weitgehend entmischt, 3 ml Wasser, 36 ml Emulsion |

### Beispiel 3

In einem 2-Liter-Reaktionsgefäß werden 150 g Polytetrahydrofuran (MG etwa 2900) (BASF AG), 26 g Powderlink® 1174 (Cytec) und 173 g Poly-(Ethylen/Butylen)-Diol (Kraton® liquid Shell AG) in Toluol gelöst und unter Stickstoff auf 110°C erhitzt. Nach Zugabe von 1,50 g Nacure® (Worlee, Dodecylbenzolsulfonsäure, 70% in Isopropanol) wird unter Vakuum (450 mm Hg-Säule) Toluol aus dem Reaktionsgemisch entfernt. Nach 2h Reaktionszeit werden 0,95 g Triethanolamin zugegeben und das Produkt über Nacht getrocknet. Es entsteht eine klebrige Masse, die in Wasser unlöslich, in Toluol jedoch gut löslich ist.

### Beispiel 4

In einem 1-Liter-Reaktionsgefäß werden 60 g Polytetrahydrofuran (MG etwa 2900) (BASF AG), 8 g Powderlink® 1174 (Cytec) und 21 g Pluriol® A1350P (BASF AG) in Toluol gelöst und unter Stickstoff 1 h auf 110°C erhitzt. Nach Zugabe von 1,50 g Nacure® (Worlee, Dodecylbenzolsulfonsäure, 70 % in Isopropanol) wird unter Vakuum 450 mm Hg-Säule) Toluol aus dem Reaktionsgemisch entfernt. Nach 2 h Reaktionszeit werden 0,95 g Triethanolamin zugegeben und das Produkt über Nacht getrocknet. Es entsteht eine weißliche Masse, die in Wasser unlöslich, in Toluol jedoch gut löslich ist.

### Beispiel 5

In einem 1-Liter-Reaktionsgefäß werden 60 g Polytetrahydrofuran (MG etwa 2900) (BASF AG), 8 g Powderlink® 1174 (Cytec) und 124 g Polyethylenglykol M5000 (Clariant GmbH) in Toluol gelöst und unter Stickstoff 1 h auf 110°C erhitzt. Nach Zugabe von 0.85 g Nacure® (Worlee, Dodecylbenzolszlfonsäure, 70 % in Isopropanol) wird unter Vakuum (450 mm Hg-Säule) Toluol aus dem Reaktionsgemisch entfernt. Nach 3,5 h Reaktionszeit werden 0,47 g Triethanolamin zugegeben, 10 min gerührt und das Produkt über Nacht getrocknet. Es entsteht eine weiße Masse, die in Wasser unlöslich, in Toluol jedoch gut löslich ist.

### Beispiel 6

In einem 1-Liter-Reaktionsgefäß werden 60 g Polytetrahydrofuran (MG etwa 2900)(BASF AG), 8 g Powderlink® 1174 (Cytec) und 49,7 g Polyethylenglykol M2000 (Clariant GmbH) in Toluol gelöst und unter Stickstoff 1 h auf 110°C erhitzt. Nach Zugabe von 0,51 g Na cure® (Worlee, Dodecylbenzolsulfonsäure, 70 % in Isopropanol) wird unter Vakuum (450 mm Hg-Säule) Toluol aus dem Reaktionsgemisch entfernt. Nach 3,5 h Reaktionszeit werden 0,32 g Triethanolamin zugegeben, 10 min gerührt und das Produkt über Nacht getrocknet. Es entsteht eine weiße Masse, die in Wasser unlöslich, in Toluol jedoch gut löslich ist.

## Patentansprüche

1. Pfropfpolymere oder -copolymere des Strukturtyps, 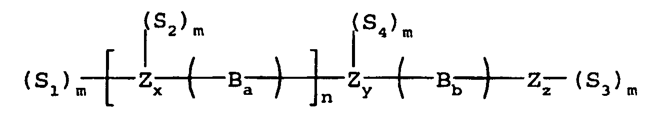 worin bedeuten:
(Bₐ) und (B_{b}): gleiche oder voneinander verschiedene hydrophile bzw. überwiegend unpolare Ba- sis- oder Grundpolymerketten, gegebenen- falls mit freien Valenzen zur Ausbildung einer vernetzten Struktur;
Zₓ bis Z_{z}: gleiche oder voneinander verschiedene Aminoplast-Zentraleinheiten auf der Basis eines Melamin-Formaldehyd- oder Harn- stoff-Formaldehyd-Harzes, gegebenenfalls mit freien Valenzen zur Ausbildung einer vernetzten Struktur;
(S₁) bis (S₄) : gleiche oder voneinander verschiedene hydrophobe oder hydrophile polare oder unpolare Seitenketten;
m = 1 - 10;
n: eine ganze Zahl von 0 bis 5000;
und die Struktur durch beliebige Endgruppen abgesättigt ist.

2. Pfropfpolymer oder -copolymer nach Anspruch 1, **dadurch gekennzeichnet, dass** die Aminoplast-Zentraleinheit Zₓ bis Z_{z} aufgebaut ist aus Monomeren der Formeln: 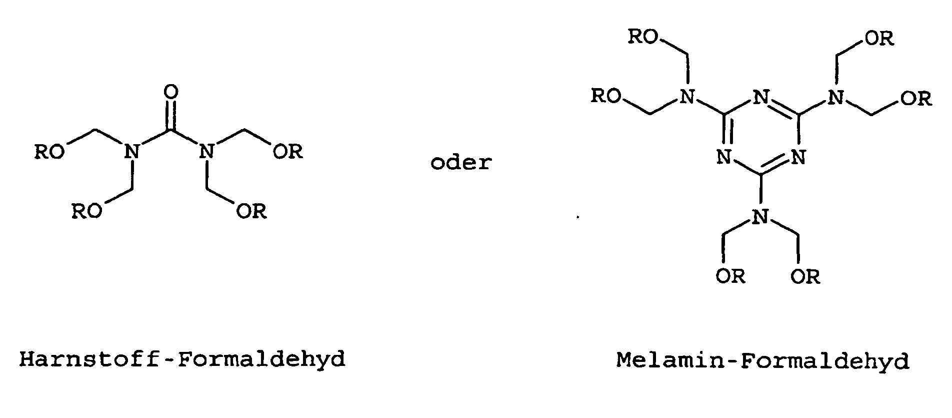 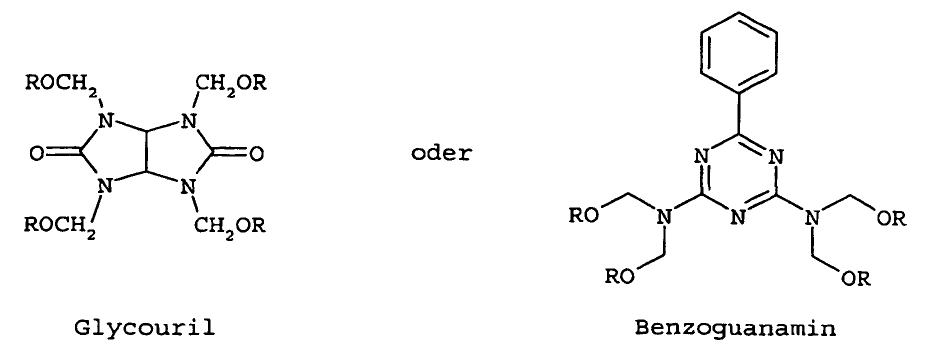 worin R eine niedere Alkylgruppe, vorzugsweise eine Methyl- oder Ethylgruppe, darstellt.

3. Pfropfpolymere oder -copolymere nach Anspruch 1 oder 2 **dadurch gekennzeichnet, dass** die Basis- oder Grundpolymerkette(Bₐ) bis (B_{c}) vorzugsweise eine Polyalkylen-, z. B. eine Polyethylen- oder Polypropylen-; eine Polyoxyalkylen-, z.B. eine Polyoxyethylen-oder eine Polyoxy(ethylen-butylen)-; eine Polyurethan-, eine Polyoxyacrylat- oder -methacrylat-, eine Polycarbonat-und/oder eine Polysiloxan-Gruppierung darstellt.

4. Pfropfpolymere oder -copolymere nach einem der Ansprüche 1 bis 3 **dadurch gekennzeichnet, dass** mindestens eine Seitenkette (S₁) bis (S₄) eine Tensidstruktur mit einem polaren und einem unpolaren Ende hat und über eine OH-Gruppe mit der Zentraleinheit Zₓ bis Z_{z} reaktionsfähig ist.

5. Pfropfpolymere oder -copolymere nach einem der Ansprüche 1 bis 4 **dadurch gekennzeichnet, dass** die Seitenketten (S₁) bis (S₄) aus hydrophoben und/oder hydrophilen Seitengruppen, ausgewählt aus einseitig alkylterminierten Polyethylen/Polypropylen-Copolymeren, gesättigten oder ungesättigten C₉- C₃₆-Alkylethoxylaten, CH₃-O-[CH₂-CH₂-O-]ₚH, Alk-O-[CH (CH₃)CH₂O-]ₚH, CH₃-(CH₂)ₙCH=CH-(CH₂)ₘ-CH₂OH (n, m, p=1 bis 5) 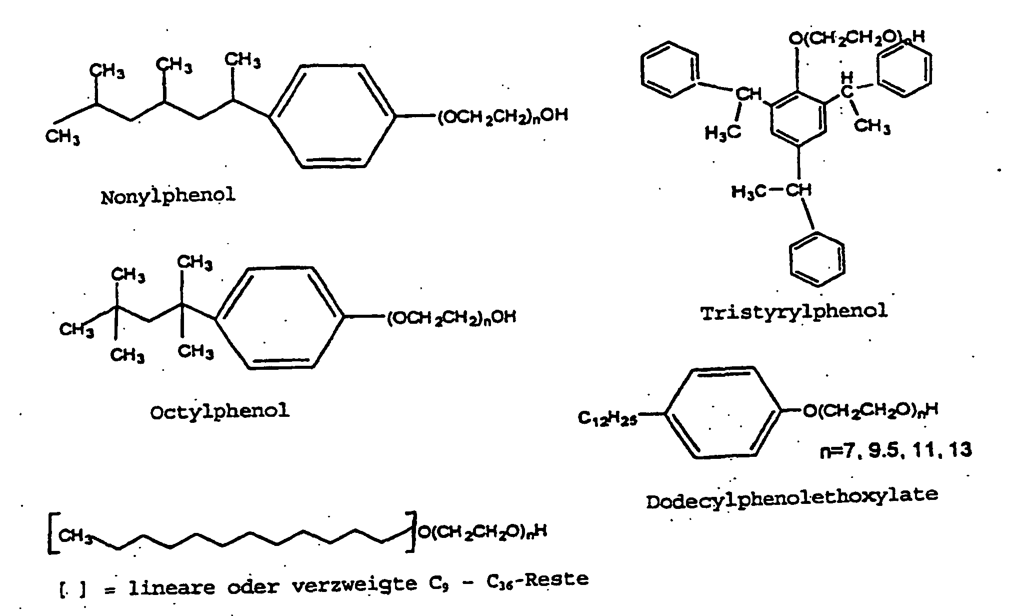 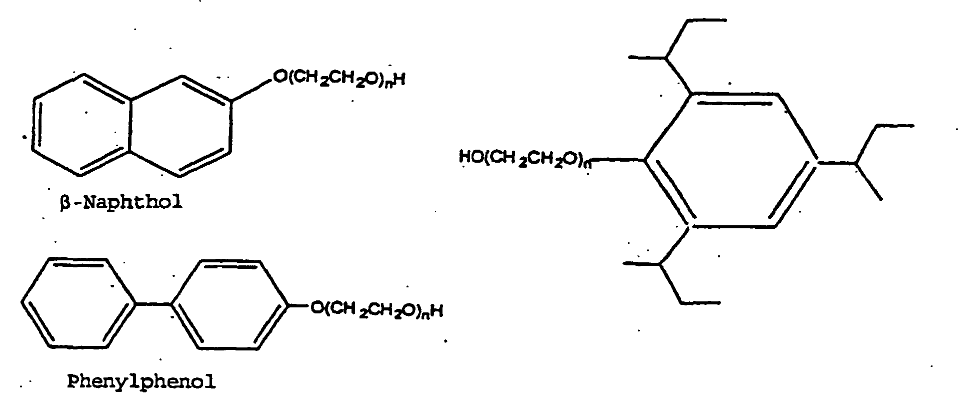 abgeleitet sind.

6. Pfropfpolymere oder -copolymere nach einem der Ansprüche 1 bis 5 **dadurch gekennzeichnet, dass** n eine ganze Zahl von 1 bis 500, vorzugsweise von 1 bis 100, darstellt.

7. Pfropfpolymere oder -copolymere nach einem der Ansprüche 1 bis 6 **dadurch gekennzeichnet, dass** die Basis- oder Grundpolymerketten(Bₐ) bis (B_{b}) im wesentlichen hydrophob und die Seitenketten (S₁) bis (S₃) im wesentlichen hydrophil sind.

8. Pfropfpolymere oder -copolymere nach einem der Ansprüche 1 bis 8 **dadurch gekennzeichnet, dass** sie in fester oder in flüssiger Form vorliegen und ihr Molekulargewicht zwischen etwa 1.000 und 10.000.000, vorzugsweise zwischen etwa 1.000 und 1.000.000 liegt.

9. Verfahren zur Herstellung der Pfropfpolymeren oder -copolymeren nach einem der Ansprüche 1 bis 8 **dadurch gekennzeichnet, dass** man die Monomere oder Präpolymere in üblicher Weise, entweder in Lösung in Wasser oder in einem organischen Lösemittel, in Emulsion oder Suspension oder durch direkte Umsetzung der Komponenten in der Masse oder in Pulverform in der Schmelze, durch Polymerisation, Polyaddition, Polykondensation mit oder ohne Katalysator, vorzugsweise in einem Einstufenverfahren, miteinander umsetzt.

10. Verwendung der Pfropfpolymeren und -copolymeren nach einem der Ansprüche 1 bis 8 oder hergestellt nach Anspruch 9, gelöst in organischem Lösungsmittel, oder aber in reiner flüssiger oder in Pulverform.

11. Verwendung der Pfropfpolymere oder -copolymere nach einem der Ansprüche 1 bis 8 oder hergestellt nach Anspruch 9, als Bindemittel für Farben und/oder Lacke, Klebstoffe, Lasuren und/oder Papierbeschichtungen.

12. Verwendung nach Anspruch 11 **dadurch gekennzeichnet, dass** man das Pfropfpolymer oder -copolymer in üblichen Bindemitten als Co-binder einsetzt, um die Stabilität des flüssigen Systems bzw. die Filmbildungseigenschaften zu verbessern.

13. Verwendung der Pfropfpolymeren oder -copolymeren nach einem der Ansprüche 1 bis 8 oder hergestellt nach Anspruch 9, als Haftvermittler zwischen anorganischen oder organischen Pigment- und/oder Füllstoffoberflächen und organischen Polymermatrices.

14. Verwendung der Pfropfpolymeren oder -copolymeren nach einem der Ansprüche 1 bis 8 oder hergestellt nach Anspruch 9, als Emulgatoren oder Netzmittel in flüssigen oder pastösen gelartigen Systemen, wie Kosmetika, Personal Care-Produkten, Haushaltsreinigern, Farben, Lacken und/oder flüssigen Kunststoffen.

15. Verwendung der Pfropfpolymeren oder -copolymeren nach einem der Ansprüche 1 bis 8 oder hergestellt nach Anspruch 9, als Vermittlerbrücke in gefüllten Kunststoffen oder Kunststoffgegenständen, die aus unverträglichen Kunststoffen oder Polymeren bestehen.

16. Verwendung der Pfropfpolymeren oder -copolymeren nach einem der Ansprüche 1 bis 8 oder hergestellt nach Anspruch 9, als Emulgator bei der Emulsionspolymerisation.

17. Verwendung der Pfropfpolymeren oder -copolymeren nach einem der Ansprüche 1 bis 8 oder hergestellt nach Anspruch 9, als Makrotensid zur Stabilisierung von Emulsionen.

18. Verwendung der Pfropfpolymeren oder -copolymeren nach einem der Ansprüche 1 bis 8 oder hergestellt nach Anspruch 9, zum Einbau als Makromonomer mit biologisch abbaubaren Gruppen in eine Polymermatrix.

19. Verwendung der Pfropfpolymeren oder -copolymeren nach einem der Ansprüche 1 bis 8 oder hergestellt nach Anspruch 9, zum Einbau als Antistatika in eine Polymermatrix.

20. Die bei den Verwendungen nach einem der Ansprüche 10 bis 19 erhaltenen Folgeprodukte.

## Claims

1. Graft polymers or copolymers of the structural type, 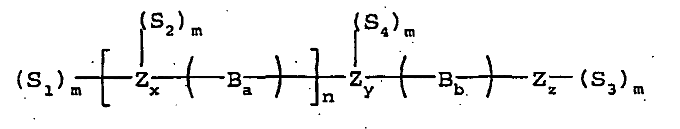 in which:
(Bₐ) and (B₀) : or predominantly nonpolar base polymer chains, optionally with free valencies for the formation of a crosslinked structure;
Zₓ to Z_{z}: mean identical or different aminoplast central units based on a melamine- formaldehyde or urea-formaldehyde resin, optionally with free valencies for the formation of a crosslinked structure;
(S₁) to (S₄) : mean identical or different hydrophobic or hydrophilic polar or nonpolar side chins;
m = 1-10;
n: means an integer from 0 to 5000;
and the structure is saturated by any desired end groups.

2. A graft polymer or copolymer according to claim 1, **characterised in that** the aminoplast central unit Zₓ to Z_{z} is synthesised from monomers of the formulae: 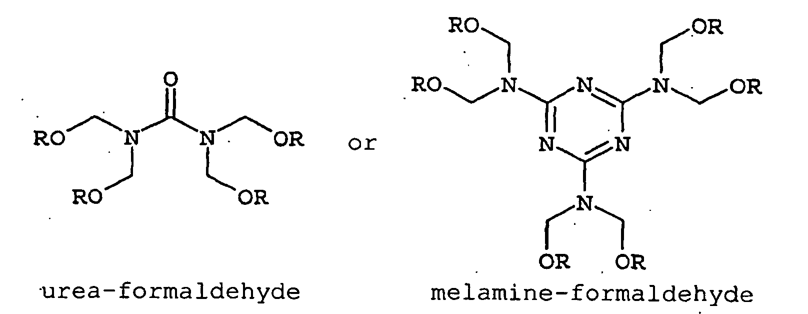 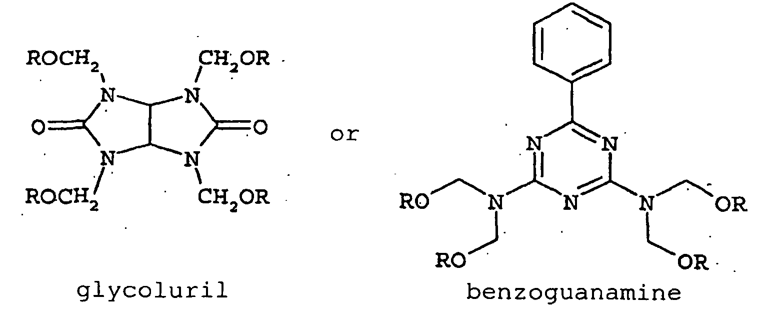 in which R is a lower alkyl groups, preferably a methyl or ethyl group.

3. Graft polymers or copolymers according to claim 1 or claim 2, **characterised in that** the base polymer chain (Bₐ) to (B_{c}) is preferably a polyalkylene group, for example a polyethylene or polypropylene group; a polyoxyalkylene group, for example a polyoxyethylene or polyoxy(ethylene/butylene) group; a polyurethane group, a polyoxyacrylate or a polyoxymethacrylate group, a polycarbonate group and/or a polysiloxane group.

4. Graft polymers or copolymers according to any one of claims 1 to 3, **characterised in that** at least one side chain (S₁) to (S₄) has a surfactant structure with a polar and a nonpolar end and is capable of reacting with the central unit Zₓ to Z_{z} via an OH group.

5. Graft polymers or copolymers according to any one of claims 1 to 4, **characterised in that** the side chains (S₁) to (S₄) are derived from hydrophobic and/or hydrophilic side groups selected from among polyethylene/polypropylene copolymers alkyl-terminated on one end, saturated or unsaturated C₉-C₃₆ alkyl ethoxylates, CH₃-O-[CH₂-CH₂-O]pH, Alk-O-[CH(CH₃)CH₂O-]pH, CH₃-(CH₂)ₙCH=CH-(CH₂)ₘ-CH₂OH (n, m, p = 1 to 5),

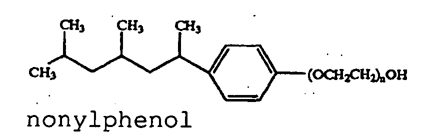

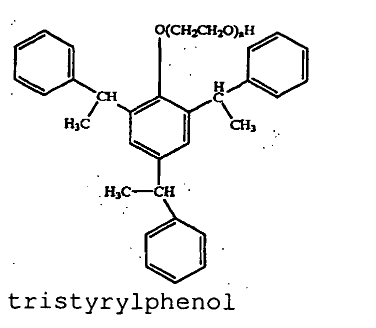

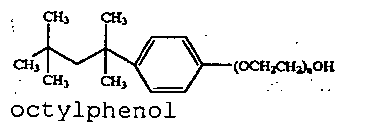

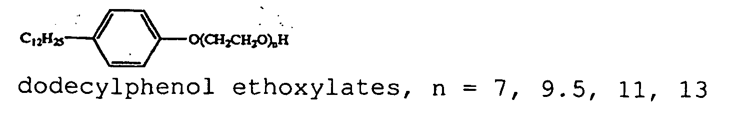

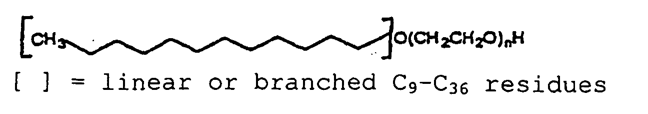

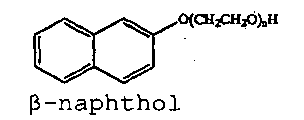

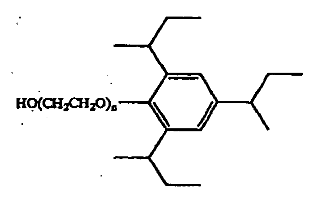

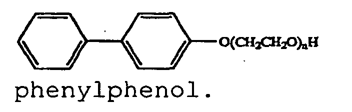

6. Graft polymers or copolymers according to any one of claims 1 to 5, **characterised in that** n is an integer from 1 to 500, preferably from 1 to 100.

7. Graft polymers or copolymers according to any one of claims 1 to 6, **characterised in that** the base polymer chains (Bₐ) to (B_{b}) are substantially hydrophobic and the side chains (S₁) to (S₃) are substantially hydrophilic.

8. Graft polymers or copolymers according to any one of claims 1 to 8, **characterised in that** they assume solid or liquid form and the molecular weight thereof is between approximately 1,000 and 10,000,000, preferably between approximately 1,000 and 1,000,000.

9. A process for the production of the graft polymers or copolymers according to any one of claims 1 to 8, **characterised in that** the monomers or prepolymers are reacted with one another in conventional manner, either in solution in water or in an organic solvent, in emulsion or suspension or by direct reaction of the components without solvent or in powder form as a melt, by addition polymerisation, polyaddition, polycondensation with or without a catalyst, preferably in a single stage process.

10. Use of the graft polymers and copolymers according to any one of claims 1 to 8 or produced according to claim 9, dissolved in an organic solvent or alternatively in a pure liquid or powder form.

11. Use of the graft polymers or copolymers according to any one of claims 1 to 8 or produced according to claim 9, as a binder for paints and/or lacquers, adhesives, glazes and/or paper coatings.

12. Use according to claim 11, **characterised in that** the graft polymer or copolymer is used as a cobinder in conventional binders in order to improve the stability of the liquid system or film-forming characteristics.

13. Use of the graft polymers or copolymers according to any one of claims 1 to 8 or produced according to claim 9, as a coupling agent between inorganic or organic pigment and/or extender surfaces and organic polymer matrices.

14. Use of the graft polymers or copolymers according to any one of claims 1 to 8 or produced according to claim 9, as emulsifiers or wetting agents in liquid or pasty gel-like systems, such as cosmetics, personal care products, household cleaners, paints, lacquers and/or liquid plastics.

15. Use of the graft polymers or copolymers according to any one of claims 1 to 8 or produced according to claim 9, as a mediator bridge in filled plastics or plastics articles consisting of incompatible plastics or polymers.

16. Use of the graft polymers or copolymers according to any one of claims 1 to 8 or produced according to claim 9, as an emulsifier in emulsion polymerisation.

17. Use of the graft polymers or copolymers according to any one of claims 1 to 8 or produced according to claim 9, as a macrosurfactant for the stabilisation of emulsions.

18. Use of the graft polymers or copolymers according to any one of claims 1 to 8 or produced according to claim 9, for incorporation as a macromonomer having biodegradable groups in a polymer matrix.

19. Use of the graft polymers or copolymers according to any one of claims 1 to 8 or produced according to claim 9, for incorporation as an antistatic agent in a polymer matrix.

20. The products derived from the uses according to any one of claims 10 to 19.

## Revendications

1. Polymères ou copolymères greffés d'un type de structure 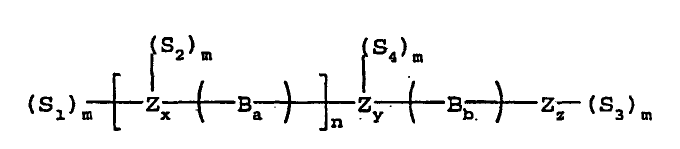 dans laquelle
(Bₐ) et B_{b}) : signifient des chaînes de polymères de base identiques ou différentes l'une de l'autre, hydrophiles, respectivement essentiellement non polaires, le cas échéant avec des valences libres pour la formation d'une structure réticulée ;
Zₓ à Z_{z} : signifient des unités centrales d'aminoplastes identiques ou différentes les unes des autres sur la base d'une résine mélamine- formaldéhyde ou urée-formaldéhyde, le cas échéant avec des valences libres pour la formation d'une structure réticulée ;
(S₁) à (S₄) : signifient des chaînes latérales identiques ou différentes les unes des autres, hydrophobes ou hydrophiles, polaires ou non polaires ;
m = 1 - 10 ;
n : est un nombre entier de 0 à 5000 ;
et dans laquelle la structure est saturée par des groupes de terminaison quelconques.

2. Polymère ou copolymère greffé selon la revendication 1, **caractérisé en ce que** l'unité centrale d'aminoplaste Zₓ à Z_{z} est constituée de monomères de formules : 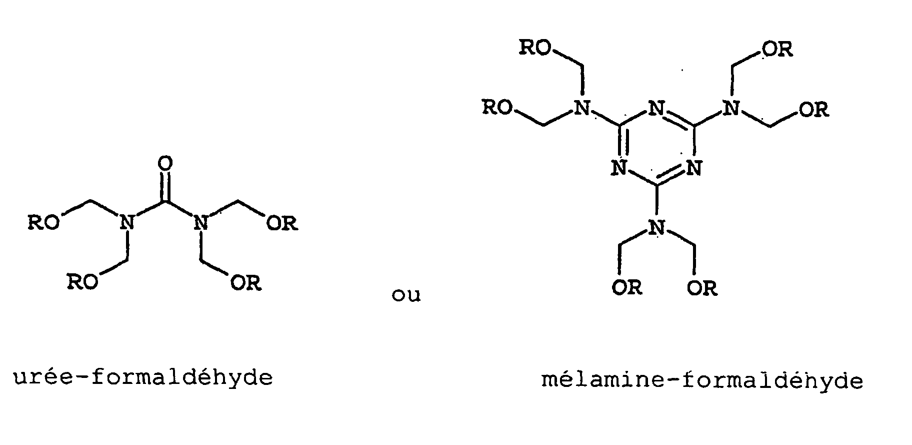 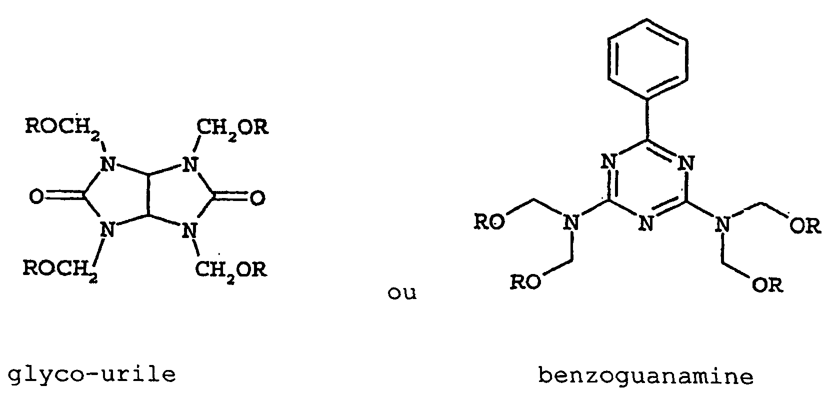 dans lesquelles R représente un groupe alkyle de faible poids moléculaire, de préférence un groupe méthyle ou éthyle.

3. Polymères ou copolymères greffés selon la revendication 1 ou 2, **caractérisés en ce que** la chaîne de polymère de base (Bₐ) à (B_{c}) représente de préférence un groupement polyalkylène, par exemple un groupement polyéthylène ou polypropylène ; un groupement polyoxyalkylène, par exemple un groupement polyoxyéthylène ou polyoxy(éthylène-butylène), un groupement polyuréthanne, un groupement polyoxyacrylate ou - méthacrylate, un groupement polycarbonate et/ou un groupement polysiloxane.

4. Polymères ou copolymères greffés selon l'une des revendications 1 à 3, **caractérisés en ce qu'**au moins une chaîne latérale (S₁) à (S₄) a une structure de tensioactif avec une extrémité polaire et une extrémité non polaire et, par l'intermédiaire d'un groupe OH, est capable de réaction avec l'unité centrale Zₓ à Z_{z}.

5. Polymères ou copolymères greffés selon l'une des revendications 1 à 4, **caractérisés en ce que** les chaînes latérales (S₁) à (S₄) sont dérivées de groupes latéraux hydrophobes et/ou hydrophiles, choisis parmi des copolymères de polyéthylène/polypropylène, des alkyléthoxylates en C₉-C₃₆ saturés ou insaturés, CH₃-O-[CH₂-CH₂-O-]ₚH, Alk-O-[CH(CH₃)CH₂O-]ₚH, CH₃-(CH₂)ₙCH=CH-(CH₂)ₘ-CHOH (n, m, p = 1 à 5)

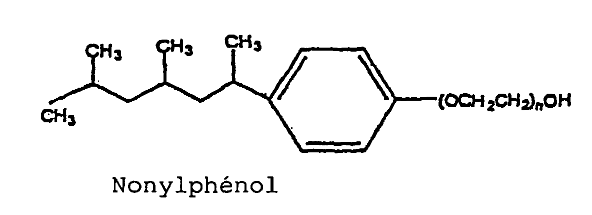

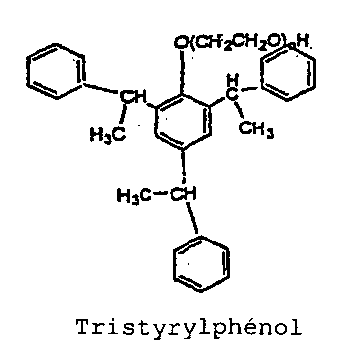

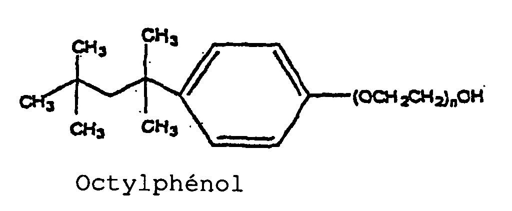

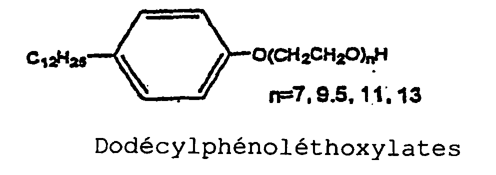

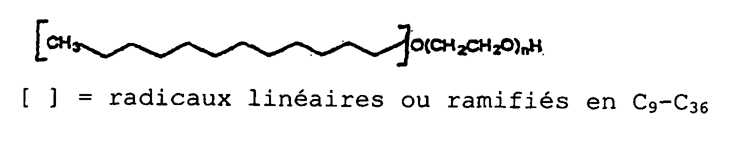

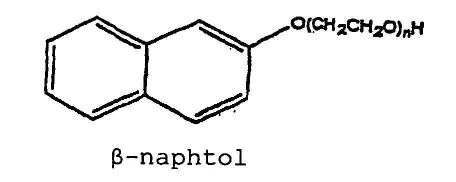

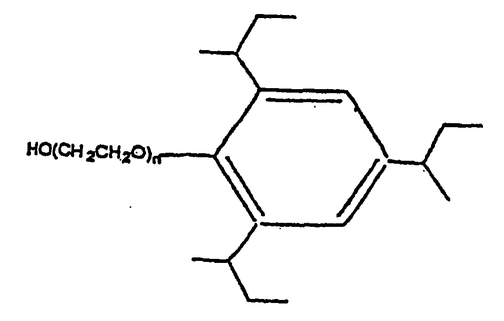

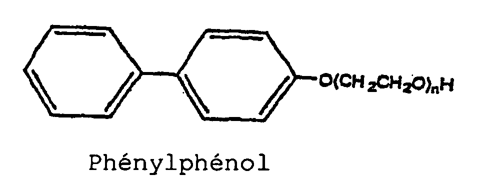

6. Polymères ou copolymères greffés selon l'une des revendications 1 à 5, **caractérisés en ce que** n représente un nombre entier de 1 à 500, de préférence de 1 à 100.

7. Polymères ou copolymères greffés selon l'une des revendications 1 à 6, **caractérisés en ce que** les chaînes de polymères de base (Bₐ) à (B_{b}) sont essentiellement hydrophobes et **en ce que** les chaînes latérales (S₁) à (S₃) sont essentiellement hydrophiles.

8. Polymères ou copolymères greffés selon l'une des revendications 1 à 8, **caractérisés en ce qu'**ils se présentent sous forme solide ou liquide et **en ce que** leur poids moléculaire est compris entre environ 1.000 et 10.000.000, de préférence entre environ 1.000 et 1.000.000.

9. Procédé de préparation de polymères ou de copolymères greffés selon l'une des revendications 1 à 8, **caractérisés en ce qu'**on fait réagir ensemble les monomères ou les pré-polymères de la façon habituelle, en solution soit dans l'eau, soit dans un solvant organique, en émulsion ou en suspension ou par réaction directe des composants dans la masse ou sous forme de poudre dans la matière fondue, par polymérisation, polyaddition, polycondensation avec ou sans catalyseur, de préférence dans un procédé en une étape.

10. Utilisation des polymères ou des copolymères greffés selon l'une des revendications 1 à 8 ou préparés selon la revendication 9, dissous dans un solvant organique ou encore sous forme pure liquide ou en poudre.

11. Utilisation des polymères ou des copolymères greffés selon l'une des revendications 1 à 8 ou préparés selon la revendication 9 comme liants pour des peintures et/ou des laques, des colles, des glacis et/ou des revêtements de papier.

12. Utilisation selon la revendication 11, **caractérisée en ce que** l'on utilise le polymère ou le copolymère greffé comme liant associé dans des liants habituels pour améliorer la stabilité du système liquide, respectivement les propriétés filmogènes.

13. Utilisation des polymères ou des copolymères greffés selon l'une des revendications 1 à 8 ou préparés selon la revendication 9 comme agents de pontage entre les surfaces des pigments inorganiques ou organiques et/ou des charges et les matrices organiques de polymères.

14. Utilisation des polymères ou des copolymères greffés selon l'une des revendications 1 à 8 ou préparés selon la revendication 9 comme émulsionnants ou agents mouillants dans des systèmes liquides ou pâteux comme des gels, tels des cosmétiques, des produits de soins personnels, des détergents domestiques, des peintures, des laques et/ou des matières plastiques liquides.

15. Utilisation des polymères ou des copolymères greffés selon l'une des revendications 1 à 8 ou préparés selon la revendication 9 comme agents de pontage dans des matières plastiques chargés ou dans des objets en plastique qui consistent en des plastiques ou des polymères incompatibles.

16. Utilisation des polymères ou des copolymères greffés selon l'une des revendications 1 à 8 ou préparés selon la revendication 9 comme émulsionnants lors de la polymérisation en émulsion.

17. Utilisation des polymères ou des copolymères greffés selon l'une des revendications 1 à 8 ou préparés selon la revendication 9 comme macro-tensioactifs pour la stabilisation d'émulsions.

18. Utilisation des polymères ou des copolymères greffés selon l'une des revendications 1 à 8 ou préparés selon la revendication 9 pour l'incorporation dans une matrice de polymère comme macromonomère avec des groupes biodégradables.

19. Utilisation des polymères ou des copolymères greffés selon l'une des revendications 1 à 8 ou préparés selon la revendication 9 pour l'incorporation dans une matrice de polymère comme antistatique.

20. Les produits consécutifs obtenus lors de la mise en oeuvre selon l'une des revendications 10 à 19.
